# EUROPÄISCHE PATENTSCHRIFT

(11) **EP 1 924 537 B1**
(45) Veröffentlichungstag und Bekanntmachung des Hinweises auf die Patenterteilung: **06.06.2018**
(21) Anmeldenummer: 06791892.0
(22) Anmeldetag: 07.09.2006
(51) Int. Cl.: C04B 35/478, C04B 41/87, B22C 3/00, B82Y 30/00, C04B 35/117, C04B 35/119, C04B 35/634, C04B 41/50, C04B 41/00, C04B 111/00

(54) **VERWENDUNG EINER ZUSAMMENSETZUNG ZUR HERSTELLUNG EINER FORMTRENNSCHICHT**
USE OF A COMPOSITION FOR THE PRODUCTION OF A MOULD RELEASE LAYER
UTILISATION D'UNE COMPOSITION POUR PRODUCTION D'UNE COUCHE DE DEMOULAGE

(30) Priorität: 14.09.2005 DE 102005045666
(43) Veröffentlichungstag der Anmeldung: 28.05.2008
(73) Patentinhaber: CeraNovis GmbH, 66117 Saarbrücken (DE)
(72) Erfinder: FABER, Stefan, 66133 Saarbrücken (DE); NONNINGER, Ralph, 66129 Saarbrücken (DE)
(74) Vertreter: Patentanwaltskanzlei Cartagena
(86) Internationale Anmeldenummer: PCT/EP2006/008713
(87) Internationale Veröffentlichungsnummer: WO 2007/031224

(56) Entgegenhaltungen:
- EP-A2- 1 508 762
- WO-A-99/41030
- DE-A1- 19 626 375
- US-A- 4 740 246
- DATABASE WPI Week 197617 Derwent Publications Ltd., London, GB; AN 1976-31208X XP002412724 & JP 51 009717 B (NISSAN CHEM IND LTD) 29. März 1976 (1976-03-29)
- DUAN R-G ET AL: "Processing and microstructure of high-pressure consolidated ceramic nanocomposites" SCRIPTA MATERIALIA, ELSEVIER, AMSTERDAM, NL, Bd. 51, Nr. 12, Dezember 2004 (2004-12), Seiten 1135-1139, XP004580455 ISSN: 1359-6462
- ANANTHAKUMAR S ET AL: "Microstructural features and mechanical properties of Al2O3-Al2TiO5 composite processed by gel assisted ceramic extrusion" BRITISH CERAMIC TRANSACTIONS INST. MATER UK, Bd. 101, Nr. 1, Februar 2002 (2002-02), Seiten 38-43, XP008073070 ISSN: 0967-9782
- DATABASE COMPENDEX [Online] ENGINEERING INFORMATION, INC., NEW YORK, NY, US; BAE DONG-SIK ET AL: "Fabrication and microstructure of Al2O3-TiO2 composite membranes with ultrafine pores" XP002412722 Database accession no. EIX98104010020 & CERAM INT; CERAMICS INTERNATIONAL 1998 ELSEVIER SCIENCE LTD, OXFORD, ENGL, Bd. 24, Nr. 1, 1998, Seiten 25-30,
- INNOCENZI ET AL: "Low temperature synthesis of MgxAl2(1-x)Ti(1+x)O5 films by sol-gel processing" JOURNAL OF THE EUROPEAN CERAMIC SOCIETY, ELSEVIER SCIENCE PUBLISHERS, BARKING, ESSEX, GB, Bd. 25, Nr. 16, November 2005 (2005-11), Seiten 3587-3591, XP005013066 ISSN: 0955-2219
- ANANTHAKUMAR S ET AL: "Extrusion characteristics of alumina-aluminium titanate composite using boehmite as a reactive binder", JOURNAL OF THE EUROPEAN CERAMIC SOCIETY, ELSEVIER SCIENCE PUBLISHERS, BARKING, ESSEX, GB, vol. 21, no. 1, 1 January 2001 (2001-01-01), pages 71-78, XP004224374, ISSN: 0955-2219, DOI: 10.1016/S0955-2219(00)00164-3

## Beschreibung

Die vorliegende Erfindung betrifft die Verwendung einer Zusammensetzung zur Herstellung einer Formtrennschicht.

Bei der Verarbeitung von Schmelzen anorganischer Werkstoffe, insbesondere von Metall- und Glasschmelzen, ist es üblich, die Oberflächen von Werkzeugen, Hilfsmitteln und insbesondere von Formen, die mit den flüssigen Werkstoffen unmittelbar in Kontakt kommen, mit einem Trennmittel zu versehen. Ein solches Trennmittel (das gewöhnlich als Formtrennschicht bezeichnet wird) hat die Aufgabe, die Reaktion einer Schmelze mit den genannten Oberflächen zu verhindern. Die Haftung der Schmelze an diesen Oberflächen soll sowohl im flüssigen als auch im festen (abgekühlten) Zustand möglichst gering sein. So läßt sich beispielsweise ein Gußteil leichter aus einer Form herauslösen, die mit einer Formtrennschicht versehen ist. Eine Formtrennschicht reduziert den Verschleiß einer Form und wirkt sich entsprechend positiv auch auf deren Haltbarkeit aus.

Formtrennschichten sollten an den Oberflächen von Gußteilen nicht anhaften und, sofern sie als Verschleißschlichten aufgetragen werden, sich auch mit den Oberflächen der Formen, Werkzeuge oder Hilfsmittel nicht allzu fest verbinden. Darüber hinaus sollte eine Formtrennschicht nicht brennbar und zudem umweltverträglich sein, was insbesondere heißt, daß unter hohen Temperaturen keine toxischen Substanzen ausgasen sollten. In der Regel stellt man Formtrennschichten in möglichst gleichmäßigen Schichtdicken durch Aufstreichen oder Aufsprühen einer streich- bzw. sprühbaren Zusammensetzung her. Eine solche Zusammensetzung zur Herstellung von Formtrennschichten bezeichnet man auch als Schlichte.

Aus dem Stand der Technik sind sowohl rein organische als auch anorganische Formtrennschichten bekannt. Die US 5076339 A beschreibt beispielsweise eine organische Formtrennschicht auf Basis von niedrigschmelzenden Wachsen. Derartige organische Trennschichten werden allerdings bei Kontakt mit einer mehrere hundert Grad heißen Metall- oder Glasschmelzen sofort thermisch zersetzt. Zwischen einer mit der organischen Trennschicht versehenen Form und der Schmelze kann dabei ein Gaspolster entstehen, das wiederum zur Ausbildung von Poren im Gußteil führen kann.

Anorganische Formtrennschichten sind aus diesem Grund bei der Verarbeitung von heißen Metall- oder Glasschmelze in der Regel bevorzugt.

Aus der EP 1 508 762 A2 sind anorganische Formtrennschichten mit einer Matrix aus Titandioxid-Aluminiumoxid bekannt. In die Matrix können gegebenenfalls weitere Oxidpartikel eingelagert sein.

Aus der US 4740246 A sind Formtrennschichten bekannt, die sich besonders für titanhaltige Metallschmelzen eignen. Hergestellt werden sie aus nanoskaligem Zirkonium- oder Yttriumoxid.

Kommerziell erhältliche anorganische Formtrennschichten basieren meist auf den Verbindungen Graphit (C), Molybdändisulfid (MoS₂) und Bornitrid (BN), letzteres insbesondere in seiner hexagonalen Form. Auf diesen Werkstoffen basierende Formtrennschichten zeichnen sich durch ihre außerordentlich geringe Benetzbarkeit durch Metallschmelzen aus. Besonders geringe Benetzbarkeit weisen sie gegenüber Aluminium- und Magnesium-Schmelzen sowie gegenüber Schmelzen aus Aluminium-Magnesium-Legierungen auf. Während allerdings Graphit an der Luft bereits bei Temperaturen um 500 °C, Molybdändisulfid sogar bereits ab 400 °C oxidiert wird, ist Bornitrid unter gleichen Bedingungen bis etwa 900 °C stabil. Entsprechend eignet sich Bornitrid insbesondere als Bestandteil von Formtrennschichten für den Hochtemperatureinsatz.

Allerdings sind sowohl Formtrennschichten auf Basis von Graphit oder Molybdändisulfid als auch solche auf Basis von Bornitrid in der Regel nicht sehr abrasionsbeständig. Insbesondere die Verarbeitung von Leichtmetallschmelzen oder Glasschmelzen (Schmelzen, bei denen hohe Fließgeschwindigkeiten auftreten) stellt hohe mechanische Anforderungen, denen die bekannten anorganischen Formtrennschichten dauerhaft nicht gerecht werden. Die aus dem Stand der Technik bekannten Formtrennschichten verschleißen entsprechend sehr schnell, sind aus diesem Grund in der Regel nicht zur mehrmaligen Verwendung vorgesehen und müssen regelmäßig erneuert werden.

Aus der JP 51 009717 B ist eine Zusammensetzung bekannt, die zum einen kolloidale Partikel aus Aluminiumoxid sowie Partikel mit einer Größe < 200 mu umfasst. Bei letzteren kann es sich beispielsweise um Aluminiumtitanat-Partikel handeln. Die Zusammensetzung eignet sich zur Herstellung hitzestabiler Formen.

Weitere aluminiumtitanathaltige Zusammensetzungen sind von Duan et al. in Scripta Materialia, Elsevier, Amsterdam, NL, Bd. 51, Nr.12, Dezember 2004, 1135-1139 ("Processing and microstructure of high-pressure consolidated ceramic nanocomposites") beschrieben. Offenbart sind Nanokomposite aus Aluminiumoxid und Titandioxid, die auch Aluminiumtitanat enthalten. Bei dem Aluminiumtitanat handelt es sich um ein metastabiles Aluminiumtitanat, das sich wieder zu Aluminiumoxid und Titandioxid zersetzt.

Aus der Veröffentlichung "Microstructural features and mechanical properties of Al₂O₃-Al₂TiO₅ composite processed by gel assisted ceramic extrusion" von Anathakumar et al. (British ceramic transactions inst. Mater UK, Bd. 101, Nr. 1, Februar 2002, Seiten 38-43) ist eine Aluminium-Aluminiumtitanat-Kompositverbindung bekannt, die unter Zugabe von Boehmit in nanoskaliger Form hergestellt wurde. Korngrößenverteilungen für die einzelnen Komponenten sind nicht angegeben.

Aus der DE 196 26 375 A1 sind Pulver aus Aluminiumtitanat, aus Cordierit und aus Mullit bekannt. Korngrößenverteilungen für diese Pulver sind jedoch nirgendwo angegeben.

Die Aufgabe der vorliegenden Erfindung besteht in der Bereitstellung einer Formtrennschicht, die aus dem Stand der Technik bekannte Nachteile nicht aufweist. Eine erfindungsgemäße Formtrennschicht soll gegenüber Metallschmelzen möglichst inert sowie oxidationsbeständig sein. Insbesondere soll eine erfindungsgemäße Formtrennschicht eine geringe Benetzbarkeit gegenüber Metall- und Glasschmelzen aufweisen und zugleich abrasionsbeständig sein. Sie soll hohen mechanischen Belastungen, die beispielsweise bei der Verarbeitung von Schmelzen mit hohen Fließgeschwindigkeiten auftreten, standhalten können und somit zur mehrmaligen Verwendung (selbst bei dauerhafter Belastung über mehrere Tagen und Wochen) geeignet sein.

Diese Aufgabe wird gelöst durch die Verwendung einer aluminiumtitanathaltigen Zusammensetzung mit den Merkmalen des Anspruchs 1 zur Herstellung einer Formtrennschicht für die Verarbeitung von Metall- und Glasschmelzen. Bevorzugte Ausführungsformen der erfindungsgemäßen Verwendung sind in den abhängigen Ansprüchen 2 bis 10 beschrieben.

Die verwendete Zusammensetzung enthält Aluminiumtitanat als Komponente A. Zudem weist die Zusammensetzung eine oxidische anorganische Komponente B auf, bei der es sich um Aluminiumoxid handelt, sowie einen Binder mit nanoskaligen Teilchen als Komponente C und ein Suspensionsmittel als Komponente D. Zudem weist die Zusammensetzung Bornitrid auf.

Überraschenderweise wurde gefunden, daß es insbesondere im Hinblick auf die Abrasionsstabilität einer aus der Zusammensetzung herstellbaren Schicht oder Beschichtung besonders vorteilhaft ist, daß in der Zusammensetzung eine bestimmte Korngrößenverteilung vorherrscht. Die Teilchen aus Komponente A weisen eine mittlere Teilchengröße > 500 nm, insbesondere > 1 µm, auf. Für die Aluminiumoxidteilchen der Komponente B sind mittlere Teilchengrößen zwischen 100 nm und 1 µm, insbesondere zwischen 200 nm und 1 µm, besonders bevorzugt. Maximal beträgt die mittleren Teilchengröße 10 µm. Die nanoskaligen Teilchen der Binderkomponente C sind wesentlich kleiner, sie weisen nämlich eine mittlere Teilchengröße von < 50 nm, insbesondere < 25 nm, auf.

Die Funktionsweise eines Binders mit solchen nanoskaligen Teilchen ist in der WO 03/093195 A1 ausführlich beschrieben. Die im Binder eingesetzten Nanoteilchen verfügen über sehr große spezifische Oberflächen, die vorzugsweise mit reaktiven Hydroxylgruppen belegt sind. Diese Oberflächengruppen sind in der Lage, bereits bei Raumtemperatur mit den Oberflächengruppen der zu bindenden (üblicherweise gröberen) Teilchen zu vernetzen. Bei Temperaturen oberhalb 200 °C, bevorzugt oberhalb 300 °C, setzt aufgrund der extrem hohen Oberflächenenergien der Nanoteilchen ein Materialtransport hin zu den Kontaktstellen der zu bindenden Teilchen ein, der zu einer weiteren Verfestigung führt.

Für die Teilchen der Komponente A ist eine mittlere Teilchengröße zwischen 1 µm und 25 µm, vorzugsweise zwischen 1 µm und 10 µm, insbesondere zwischen 2 µm und 10 µm, weiter bevorzugt. In einer besonders bevorzugten Ausführungsform beträgt die mittlere Teilchengröße für die Teilchen der Komponente A ca. 5 µm.

Zur Erklärung der ausgezeichneten Abrasionsstabilität einer aus der Zusammensetzung herstellbaren Schicht oder Beschichtung wird derzeit vermutet, daß sich die Teilchen mit der Größenverteilung, wie sie oben definiert ist, in der entstehenden Schicht oder Beschichtung besonders vorteilhaft zueinander anordnen können. Vermutlich werden kleinere Teilchen in Zwischenräume eingelagert, die zwischen benachbarten gröberen Teilchen frei bleiben, so daß sich eine Struktur mit erhöhter Dichte ergibt, deren Zusammenhalt wiederum durch den nanoskaligen Binder (Komponente C) gewährleistet wird, der die Kontaktstellen zwischen den Teilchen fixiert und verstärkt.

Bei den anorganischen Oxidteilchen der Komponente B handelt es sich bevorzugt um Aluminiumoxidteilchen mit einer Mohsschen Härte > 6.

Das wichtigste Kriterium bei der Auswahl der Teilchen der Binderkomponente C ist ihre Größe, die wie oben angegeben im Mittel 50 nm nicht überschreiten sollte. Bei den Teilchen handelt es sich insbesondere um oxidische Teilchen, vorzugsweise um Aluminiumoxid-, Zirkonoxid- und/ oder Titandioxid-Teilchen oder auch um Vorstufen dieser Verbindungen. Im Hinblick auf günstige Benetzungseigenschaften (vor allem gegenüber Leichtmetallschmelzen) haben sich insbesondere Mischungen aus Titandioxid-Teilchen mit Aluminiumoxid-Teilchen oder Böhmit-Teilchen als besonders geeignet erwiesen. Weiterhin kann es aber auch bevorzugt sein, daß der Binder nanoskalige Aluminiumtitanat-Teilchen (ggf. neben nicht nanoskaligen Aluminiumtitanat-Teilchen aus Komponente A) umfaßt.

In einer weiteren bevorzugten Ausführungsform der Zusammensetzung kann der Binder neben den genannten Nanoteilchen mindestens einen siliziumorganischen Bestandteil aus der Gruppe mit Alkylpolysiloxan, Alkylsiliconharz und Phenylsiliconharz enthalten. Der mindestens eine siliziumorganische Bestandteil kann beispielsweise in Form von wäßrigen Emulsionen eingesetzt werden und trägt zur Verfestigung und Verdichtung der herzustellenden Schicht oder Beschichtung bei.

Weiterhin ist es bevorzugt, daß der Binder mindestens einen glasartigen Bestandteil, insbesondere eine Fritte, umfaßt. Unter Fritten versteht man glasige System, in denen wasserlösliche Salze (Soda, Borax und andere) sowie weitere Stoffe silikatisch gebunden und damit weitgehend in eine wasserunlösliche Form überführt sind.

Bei der Herstellung einer Schicht oder Beschichtung auf einem Substrat aus einer Zusammensetzung enthaltend einen glasartigen Bestandteil kann dieser aufschmelzen und eine gasdichte Schicht bilden. Insbesondere bieten Schichten oder Beschichtungen, die aus einer solchen Zusammensetzung hergestellt wurden, auch einen überraschend effizienten Schutz gegen Korrosion des Substrats. Zusätzlich kann der glasartige Bestandteil auch als Binder fungieren.

An Stelle des glasartigen Bestandteils oder auch zusätzlich zu diesem kann die Zusammensetzung einen oder mehrere Bestandteile aufweisen, die einer aus der Zusammensetzung herstellbaren Schicht zusätzlich eine thermisch isolierende bzw. wärmedämmende Wirkung verleihen. Als solche Bestandteile sind insbesondere Aluminiumsilikate und Calziumsilikate wie Wollastonit (z.B. im Handel unter den Bezeichnungen Wollastonit MM80 von der Firma Carl Jäger, Deutschland, erhältlich) und Xonotlit (z.B. im Handel unter den Bezeichnungen Promaxon® D und T von der Firma Promat AG, Schweiz, erhältlich) bevorzugt. Auch Glimmer, insbesondere mikronisierter Glimmer, ist hervorragend geeignet. Eine aus einer solchen Zusammensetzung hergestellte Schicht schützt beispielsweise Werkzeuge, Hilfsmittel und Formen nicht nur vor Anhaftungen, sondern auch mit besonderem Vorteil vor den hohen thermischen Belastungen, die insbesondere im Kontakt mit flüssigen Metallschmelzen auftreten können.

Das gegebenenfalls in der Zusammensetzung enthaltene Suspensionsmittel ist vorzugsweise polar. Besonders bevorzugt weist es Wasser als Hauptbestandteil auf, es kann grundsätzlich aber auch weitere polare Komponenten wie beispielsweise Alkohole aufweisen.

In vielen Fällen ist es jedoch wünschenswert, auf organische Bestandteile im Suspensionsmittel zu verzichten. So besteht bei Anwesenheit organischer Lösungsmittel aufgrund ihres niedrigen Dampfdruckes grundsätzlich immer die Gefahr eines Brandes.

Entsprechend weist die Zusammensetzung in einer bevorzugten Ausführungsform ein Suspensionsmittel auf, das frei von nichtwäßrigen flüssigen Bestandteilen ist.

Besonders bevorzugt enthält die Zusammensetzung mindestens einen grenzflächenaktiven Stoff, insbesondere ein Polyacrylat. Der Zusatz eines grenzflächenaktiven Stoffes hat sich insbesondere in den Fällen als vorteilhaft erwiesen, in denen das Suspensionsmittel frei von nichtwäßrigen flüssigen Bestandteilen ist.

Das in derZusammensetzung als zusätzliche Komponente enthaltene Bornitrid wirkt sich positiv auf die Flexibilität, insbesondere die Rißanfälligkeit und die Elastizität, der herzustellenden Schicht bzw. Beschichtung aus.

Ähnliche Ergebnisse wurden auch durch einen Graphit-Zusatz erzielt. Entsprechend weist die Zusammensetzung in einer weiteren bevorzugten Ausführungsform Graphit als zusätzliche Komponente auf.

Die Zusammensetzung weist vorzugsweise einen Feststoffgehalt zwischen 25 Gew.-% und 60 Gew.-% auf. Die Menge des in der Zusammensetzung enthaltenen Suspensionsmittels ist grundsätzlich nicht kritisch und kann je nach Verwendung der Zusammensetzung variiert werden. In einer bevorzugten Ausführungsform liegt die Zusammensetzung in Form einer niedrigviskosen, insbesondere streichbaren oder sprühbaren Suspension vor.

Die Zusammensetzung enthält stets zwischen 40 Gew.-% und 75 Gew.-% Aluminiumoxid als Komponente B, zwischen 5 Gew.-% und 25 Gew.-% Aluminiumtitanat als Komponente A und zwischen 5 Gew.-% und 25 Gew.-% Bornitrid als zusätzliche Komponente (alle Prozentangaben bezogen auf den Feststoffgehalt in der Zusammensetzung).

Neben den bereits genannten Komponenten können die Zusammensetzungen häufig noch weitere, vorzugsweise gröbere (mit Größen bis hin in den Millimeterbereich oder noch größer), anorganische Teilchen und/oder Fasern aufweisen, insbesondere als Füllstoffe.

Die Zusammensetzung ist auf alle gängigen Metall- und Nichtmetalloberflächen applizierbar. Sie ist u. a. geeignet zur Applikation auf Gegenstände aus Aluminium, Titan, Eisen, Stahl, Kupfer, Chrom, Gußeisen, Stahlguß sowie aus Feuerfestmaterialien und Keramiken. Besonders geeignet ist sie zur Applikation auf Gegenstände aus Silikaten, Graphit, Beton und Kesselstahl.

Die Herstellung einer Formtrennschicht kann beispielsweise durch Auftragen der Zusammensetzung auf einen Gegenstand und anschließendes Trocknen erfolgen. Das Auftragen kann dabei beispielsweise durch Aufstreichen oder Aufsprühen erfolgen. Anschließend kann die getrocknete Schicht weiter verdichtet werden, was z.B. durch eine separate Temperaturbehandlung (z. B. Erhitzen der Schicht auf ca. 300 °C zum Ausbrennen ggf. anwesender organischer Bestandteile und anschließendes Sintern bei 700 °C) aber durchaus auch "in situ", also durch Kontakt mit einer mehreren hundert Grad heißen Metall- oder Glasschmelze, erfolgen kann.

Die stoffliche Zusammensetzung der Schicht entspricht im Wesentlichen der oben definierten stofflichen Zusammensetzung des Feststoffanteils der verwendeten Zusammensetzung.

In einer bevorzugten Ausführungsform weist die Schicht Bestandteile mit thermisch isolierender Wirkung, insbesondere Aluminiumsilikate, Calziumsilikate und/oder Glimmer, auf. Eine solche Ausführungsform schützt beispielsweise Werkzeuge, Hilfsmittel und Formen nicht nur vor Anhaftungen, sondern auch mit besonderem Vorteil vor den hohen thermischen Belastungen, die insbesondere im Kontakt mit flüssigen Metallschmelzen auftreten können.

Vorzugsweise weist die Schicht eine Dicke zwischen 5 µm und 500 µm, vorzugsweise zwischen 20 µm und 100 µm, auf.

So herstellbare Formtrennschichten zeichnen sich insbesondere durch eine hohe thermische und chemische Beständigkeit sowie Widerstandsfähigkeit gegenüber mechanischen Belastungen, insbesondere durch hohe Abrasionsstabilität, aus. Im Gegensatz zu aus dem Stand der Technik bekannten Formtrennschichten sind die vorliegend beschriebenen Formtrennschichten deshalb zur mehrfachen Verwendung (selbst bei dauerhafter Belastung über mehrere Tagen und Wochen) geeignet.

Besonders zeichnen sich mit der beschriebenen Zusammensetzung herstellbare Formtrennschichten durch eine exzellente Thermoschockbeständigkeit aus, was sich sehr positiv auf die Beständigkeit der Schicht auswirkt. Ideal geeignet sind aluminiumtitanathaltige Beschichtungen für Steigrohre in Niederdruckgießmaschinen, für Dosiersteigrohre in Strigo- und Westöfen, für Angußdüsen für den ND-Guß, für Gießdüsen für das DC-Casting, für Füllrohre und Breakringe.

Mit einer Formtrennschicht versehene Metallrohre (z. B. aus Edelstahl, Chrom-Nickel-Stahl oder Chrom-Molybdän-Stahl) sind geschützt gegen die Anhaftung anorganischer Schlacken und Schmelzen.

Beschrieben wird im Folgenden noch ein Herstellungsverfahren für die bei der erfindungsgemäßen Verwendung benötigte Zusammensetzung. Dieses umfaßt das Dispergieren von Komponente A in Wasser und das anschließende Vermischen der entstandenen Dispersion mit den wäßrigen Dispersionen/Suspensionen von Komponente B, Komponente C und ggf. weiteren Komponenten.

Dabei ist es bevorzugt, daß zum Dispergieren von Komponente A diese zusammen mit Wasser und mindestens einem Polyacrylat in einer Mühle (z. B. eine Mörsermühle, eine Kugelmühle oder eine Ringspaltkugelmühle) gemahlen wird. Eine Zugabe der weiteren Komponenten, insbesondere des nanoskaligen Binders (Komponente C), erfolgt vorzugsweise erst danach.

An Stelle des Polyacrylats kommen auch weitere organische Hilfsmittel in Frage, die sich an die Oberfläche der zu dispergierenden Partikel anlagern können, wie z. B. organische Säuren, Carbonsäureamide, ß-Diketone, Oxycarbonsäuren, Polyolefine, Polyester, Polyacrylate, Polymethacrylate, Polyoxyethlenverbindungen, Polyacrylate, Polyvinylalkole und Polyvinylpyrollidon (PVP).

Weitere Merkmale der Erfindung ergeben sich aus der nachfolgenden Beschreibung von bevorzugten Ausführungsformen in Verbindung mit den Unteransprüchen. Hierbei können die einzelnen Merkmale jeweils für sich oder zu mehreren in Kombination miteinander bei einer Ausführungsform der Erfindung verwirklicht sein. Die beschriebenen besonderen Ausführungsformen dienen lediglich zur Erläuterung und zum besseren Verständnis der Erfindung und sind in keiner Weise einschränkend zu verstehen.

### Beispiel 1

4,3 kg Aluminiumtitanat (Hersteller KS-Keramik, mittlere Teilchengröße ca. 15 µm) werden mit 4,3 kg Wasser und 0,2 kg eines Polyacrylats (BYK 192, Firma BYK-Chemie GmbH) vermischt und drei Stunden in einer Rührwerkskugelmühle homogenisiert. Neben dieser ersten Mischung werden noch drei weitere Mischungen angesetzt. Die zweite Mischung besteht aus 2,6 kg eines Acrylpolysiloxanes (inosil ww von der Firma Inomat GmbH) mit 11,44 kg einer wäßrigen Suspension aus nanoskaligem Zirkondioxyd (bei einem Feststoffanteil von 45 Gew.-% und einer mittleren Teilchengröße von ca. 10 nm). Die dritte Mischung besteht aus 25,7 kg Aluminiumoxid (Almatis, CT 800 SG, mittlere Teilchengröße von ca. 3 µm) dispergiert in 38,3 kg Wasser, die vierte Mischung aus 4,3 kg Bornitrid (Firma Saint-Gobain) dispergiert in 6,3 kg Wasser. Zur ersten Mischung werden nacheinander unter Rühren die zweite, dritte und vierte Mischung hinzugegeben. Es entsteht eine gebrauchsfertige Schlichte.

### Beispiel 2

Die Schlichte aus Beispiel 1 wird auf ein V2A Stahlblech aufgetragen. Die Schichtdicke beträgt zw. 30 und 40 µm. Auch nach einer eintägigen Auslagerung in einer Leichtmetallschmelze bei 750 °C war keine Beschädigung der Schicht erkennbar. Die erstarrte Gußhaut ließ sich leicht entfernen.

### Beispiel 3

Die Schlichte aus Beispiel 1 wird auf eine Probe Feuerfestbeton aufgetragen und einem Langzeitauslagerungstest unterzogen. Die Schichtdicke beträgt zwischen 30 und 40 µm. Auch nach 30 Tagen Eintauchen der Probe in eine Leichtmetallschmelze bei 750 °C konnte keine Beschädigung der Schicht erkannt werden. Die erstarrte Gußhaut ließ sich leicht entfernen. Die Härte der Schicht und Ihre Abrasionsbeständigkeit ist hervorragend. Bei einem Test mit einer vergleichbaren Feuerfestbetonprobe ohne die erfindungsgemäße Schicht drang auch hier die Leichtmetallschmelze in die Betonprobe ein, deren Gewicht sich in der Folge verdreifachte.

### Beispiel 4

Die Schlichte aus Beispiel 1 wird auf einen Feuerfeststein aus Aluminiumsilikat aufgetragen und einem Langzeitauslagerungstest unterzogen. Die Schichtdicke beträgt zwischen 30 und 40 µm. Auch nach 30 Tagen Eintauchen in eine Leichtmetallschmelze bei 750 °C konnte keine Beschädigung der Schicht erkannt werden. Die erstarrte Gußhaut ließ sich leicht entfernen.

### Beispiel 5

Die Schlichte aus Beispiel 1 wird auf einen Feuerfeststein aus Calciumsilikat aufgetragen und einem Langzeitauslagerungstest unterzogen. Die Schichtdicke beträgt zwischen 30 und 40 µm. Auch nach 30 Tagen des Eintauchens in eine Leichtmetallschmelze bei 750 °C konnte keine Beschädigung der Schicht erkannt werden. Die erstarrte Gußhaut ließ sich leicht entfernen.

### Beispiel 6

Die Schlichte aus Beispiel 1 wird auf eine Probe aus Graphit aufgetragen und einem Auslagerungstest unterzogen. Die Schichtdicke beträgt zwischen 30 und 40 µm. Auch nach 5 Tagen des Eintauchens in eine Leichtmetallschmelze bei 750 °C konnte keine Beschädigung der Schicht erkannt werden. Die erstarrte Gußhaut ließ sich leicht entfernen.

### Beispiel 7

Eine erfindungsgemäß bevorzugte Zusammensetzung weist folgende Komponenten auf:
- 57,76 Gew.-% Al₂O₃-Suspension (Feststoffgehalt 40 Gew.-%)
- 13,10 Gew.-% Al₂TiO₅ (0-140 µm)
- 5,21 Gew.-% Frittenmischung aus drei verschiedenen Glasfritten (Feststoffgehalt 50 Gew.-%)
- 17,15 Gew.-% ZrO₂- Nanobinder (Feststoffgehalt ca. 44,8 Gew.-%)
- 0,86 Gew.-% Korantin MAT
- 2,08 Gew.-% AMP (2-Amino2-methyl 1-propanol)
- 0,19 Gew.-% Deuteron XG
- 3,65 Gew.-% Silres MP 42E (Feststoffgehalt 20 Gew.-%)

Zur Herstellung der Zusammensetzung wurde Al₂O₃ (A16SG, Fa. Almatis) mit einem Polyacrylat-Additiv (0-5%) in Wasser dispergiert und eine halbe Stunde verrührt. Die entstehende Suspension wurde anschließend in einer Perlmühle gemahlen. Der Feststoffgehalt wurde dabei auf 40 Gew.-% eingestellt.

Al₂TiO₅-Pulver (Al₂TiO₅ FC6 der Fa. Alroko) mit breiter Korngrößenverteilung (<140 µm, bis in den sub-µm-Bereich) wurde ohne Dispergierung und Mahlung unter Rühren der gemahlenen Aluminiumoxid-Suspension zugesetzt.

Die Frittenmischung, bestehend aus drei verschiedenen Glasfritten mit einem Schmelzbereich zwischen 600- 750 °C, wurde nass (Feststoffgehalt 50 Gew.-%) mit einer Perlmühle gemahlen bis eine Korngröße < 10 µm erreicht ist. Die Frittenmischung wurde anschließend zu obigem Gemisch aus Al₂O₃-Suspension und Al₂TiO₅ gegeben.

Als Nanobinder wurde anschließend basisch dispergiertes ZrO₂ (Feststoffgehalt ca. 44,8 Gew.-%, Hersteller Fa. ITN) unter Rühren zur Suspension gegeben.

Mit AMP (2-Amino-2-methyl-1-propanol), das unter Rühren zur Suspension gegeben wurde, wurde deren pH-Wert auf pH 10-11 eingestellt.

Anschließend wurden Deuteron® XG, ein anionisches Heteropolysaccharid (Fa. Deuteron), Silres® MP42E, ein alkylmodifiziertes Phenylsiliconharz. (Fa. Wacker) und Korantin® MAT, ein Korrosionsinhibitor (Fa. BASF), unter Rühren zur Suspension gegeben.

Nach abgeschlossener Zugabe aller Komponenten wurde über Nacht gerührt, anschließend ist die Schlichte einsatzbereit und kann mittels Sprühen auf mineralische oder metallische Substrate appliziert werden.

### Beispiel 8

Die Schlichte aus Beispiel 7 wurde auf ein V2A Stahlblech aufgetragen.
Die Schichtdicke betrug zw. 30 und 40 µm. Auch nach einer zweitägigen Auslagerung in einer Leichtmetallschmelze bei 750 °C war keine Beschädigung der Schicht erkennbar. Die erstarrte Gußhaut ließ sich leicht entfernen.

## Patentansprüche

1. Verwendung einer Zusammensetzung enthaltend als Komponente A Teilchen aus Aluminiumtitanat in einem Anteil zwischen 5 Gew.-% und 25 Gew.-%, als Komponente B Aluminiumoxidteilchen in einem Anteil zwischen 40 Gew.-% und 75 Gew.-%, einen Binder mit nanoskaligen Teilchen als Komponente C, ein Suspensionsmittel als Komponente D, und als zusätzliche Komponente Bornitrid in einem Anteil zwischen 5 Gew.-% und 25 Gew.-%, wobei
- sich die Prozentangaben auf den Feststoffgehalt in der Zusammensetzung beziehen,
- die Teilchen aus Aluminiumtitanat eine mittlere Teilchengröße > 500 nm aufweisen,
- die Aluminiumoxidteilchen eine mittlere Teilchengröße zwischen 100 nm und 10 µm aufweisen und
- der Binder nanoskalige Teilchen mit einer mittleren Teilchengröße < 50 nm aufweist,
zur Herstellung einer Formtrennschicht, die nach der Herstellung bei der Verarbeitung von Metall- und Glasschmelzen verwendet wird.

2. Verwendung nach Anspruch 1, wobei
A: die Teilchen aus Aluminiumtitanat eine mittlere Teilchengröße > 1 µm aufweisen,
B: die Aluminiumoxidteilchen eine mittlere Teilchengröße zwischen 200 nm und 10 µm aufweisen, und
C: der Binder nanoskalige Teilchen mit einer mittleren Teilchengröße < 50 nm aufweist.

3. Verwendung nach einem der Ansprüche 1 oder 2, **dadurch gekennzeichnet, daß** die Teilchen der Komponente A eine mittlere Teilchengröße zwischen 1 µm und 10 µm aufweisen.

4. Verwendung nach einem der Ansprüche 1 bis 3, **dadurch gekennzeichnet, daß** die Teilchen der Komponente B eine Mohssche Härte > 6 aufweisen.

5. Verwendung nach einem der vorhergehenden Ansprüche, **dadurch gekennzeichnet, daß** die nanoskaligen Teilchen des Binders mindestens ein Mitglied aus der Gruppe mit Aluminiumoxid-, Zirkonoxid-, Böhmit- und Titandioxid-Teilchen umfassen.

6. Verwendung nach einem der vorhergehenden Ansprüche, **dadurch gekennzeichnet, daß** der Binder mindestens einen siliziumorganischen Bestandteil aus der Gruppe mit Alkylpolysiloxan, Alkylsiliconharz und Phenylsiliconharz umfaßt.

7. Verwendung nach einem der vorhergehenden Ansprüche, **dadurch gekennzeichnet, daß** der Binder mindestens einen glasartigen Bestandteil umfaßt.

8. Verwendung nach einem der vorhergehenden Ansprüche, **dadurch gekennzeichnet, daß** sie als zusätzliche Komponente mindestens eine Verbindung, ausgewählt aus der Gruppe mit Aluminiumsilikaten, Calziumsilikaten und Glimmer, aufweist.

9. Verwendung nach einem der vorhergehenden Ansprüche, **dadurch gekennzeichnet, daß** sie mindestens einen grenzflächenaktiven Stoff enthält.

10. Verwendung nach einem der vorhergehenden Ansprüche, **dadurch gekennzeichnet, daß** sie als zusätzliche Komponente Graphit enthält.

## Claims

1. Use of a composition comprising as component A particles of aluminium titanate in a fraction between 5 wt% and 25 wt%, as component B aluminium oxide particles in a fraction between 40 wt% and 75 wt%, a binder with nanoscale particles as component C, a suspension medium as component D, and as additional component boron nitride in a fraction between 5 wt% and 25 wt%, where
- the percentages are based on the solids content in the composition,
- the particles of aluminium titanate have an average particle size > 500 nm,
- the aluminium oxide particles have an average particle size between 100 nm and 10 µm and
- the binder comprises nanoscale particles having an average particle size < 50 nm,
for producing a mould release layer which is used after production in the processing of metal melts and glass melts.

2. Use according to Claim 1, where
A: the particles of aluminium titanate have an average particle size > 1 µm,
B: the aluminium oxide particles have an average particle size between 200 nm and 10 µm and
C: the binder comprises nanoscale particles having an average particle size < 50 nm.

3. Use according to either of Claims 1 and 2, **characterized in that** the particles of component A have an average particle size between 1 µm and 10 µm.

4. Use according to any of Claims 1 to 3, **characterized in that** the particles of component B have a Mohs hardness > 6.

5. Use according to any of the preceding claims, **characterized in that** the nanoscale particles of the binder comprise at least one member from the group with aluminium oxide particles, zirconium oxide particles, boehmite particles, and titanium dioxide particles.

6. Use according to any of the preceding claims, **characterized in that** the binder comprises at least one organosilicon constituent from the group with alkylpolysiloxane, alkylsilicone resin and phenyl-ilicone resin.

7. Use according to any of the preceding claims, **characterized in that** the binder comprises at least one glass-like constituent.

8. Use according to any of the preceding claims, **characterized in that** the composition comprises as additional component at least one compound selected from the group with aluminium silicates, calcium silicates and mica.

9. Use according to any of the preceding claims, **characterized in that** the composition comprises at least one surface-active substance.

10. Use according to any of the preceding claims, **characterized in that** the composition comprises as additional component graphite.

## Revendications

1. Utilisation d'une composition contenant en tant que composant A des particules de titanate d'aluminium en une proportion comprise entre 5 % en poids et 25 % en poids, en tant que composant B des particules d'oxyde d'aluminium en une proportion comprise entre 40 % en poids et 75 % en poids, un liant à particules nanométriques en tant que composant C, un agent de mise en suspension en tant que composant D, et en tant que composant supplémentaire du nitrure de bore en une proportion comprise entre 5 % en poids et 25 % en poids,
- les données en pour cent se rapportant à la teneur en matière solide de la composition,
- les particules de titanate d'aluminium présentant une taille moyenne de particule > 500 nm,
- les particules d'oxyde d'aluminium présentant une taille moyenne de particule comprise entre 100 nm et 10 µm et
- le liant comportant des particules nanométriques ayant une taille de particule < 50 nm,
pour la production d'une couche de démoulage qui est utilisée après la production dans le traitement de métaux fondus et de verre fondu.

2. Utilisation selon la revendication 1, dans laquelle
A : les particules de titanate d'aluminium présentent une taille moyenne de particule > 1 µm,
B : les particules d'oxyde d'aluminium présentent une taille moyenne de particule comprise entre 200 nm et 10 µm, et
C : le liant comporte des particules nanométriques ayant une taille moyenne de particule < 50 nm.

3. Utilisation selon l'une quelconque des revendications 1 et 2, **caractérisée en ce que** les particules du composant A présentent une taille moyenne de particule comprise entre 1 µm et 10 µm.

4. Utilisation selon l'une quelconque des revendications 1 à 3, **caractérisée en ce que** les particules du composant B présentent une dureté Mohs > 6.

5. Utilisation selon l'une quelconque des revendications précédentes, **caractérisée en ce que** les particules nanométriques du liant comprennent au moins un membre du groupe constitué par les particules d'oxyde d'aluminium, d'oxyde de zirconium, de boehmite et de dioxyde de titane.

6. Utilisation selon l'une quelconque des revendications précédentes, **caractérisée en ce que** le liant comprend au moins un composant organosilicié choisi dans le groupe constitué par un alkylpolysiloxane, une résine alkylsilicone et une résine phénylsilicone.

7. Utilisation selon l'une quelconque des revendications précédentes, **caractérisée en ce que** le liant comprend au moins un composant vitreux.

8. Utilisation selon l'une quelconque des revendications précédentes, **caractérisée en ce que** la composition comporte comme composant supplémentaire au moins un composé choisi dans le groupe constitué par des silicates d'aluminium, des silicates de calcium et le mica.

9. Utilisation selon l'une quelconque des revendications précédentes, **caractérisée en ce que** la composition contient au moins une substance tensioactive.

10. Utilisation selon l'une quelconque des revendications précédentes, **caractérisée en ce que** la composition comporte comme composant supplémentaire du graphite.
